# EUROPÄISCHE PATENTSCHRIFT

(11) **EP 1 391 668 B1**
(45) Veröffentlichungstag und Bekanntmachung des Hinweises auf die Patenterteilung: **17.10.2007**
(21) Anmeldenummer: 03018852.8
(22) Anmeldetag: 19.08.2003
(51) Int. Cl.: F25B 49/04, F25B 15/02, F25B 15/00

(54) **Ein- oder mehrstufige Sorptionskältemaschine oder Sorptionswärmepumpe sowie Verfahren zur Steuerung der Verdampferleistung in einer solchen Sorptionsanlage**
Single or multistage sorption refrigerating apparatus or heat pump and a method for controlling the evaporator in such an apparatus
Appareil frigorifique à sorption ou pompe à chaleur à sorption à un ou plusieurs étages et procédé de contrôle d' un évaporateur dans un tel appareil

(30) Priorität: 19.08.2002 DE 10237851
(43) Veröffentlichungstag der Anmeldung: 25.02.2004
(73) Patentinhaber: ZAE Bayern Bayerisches Zentrum für angewandte Energieforschung e.V., 85748 Garching (DE)
(72) Erfinder: Kren, Christoph, 85375 Neufahrn (DE); Schweigler, Christian, Dr. rer. nat., 82178 Puchheim (DE); Storkenmaier, Franz, 85643 Steinhöring (DE)
(74) Vertreter: Winter, Brandl, Fürniss, Hübner Röss, Kaiser, Polte Partnerschaft Patent- und Rechtsanwaltskanzlei

(56) Entgegenhaltungen:
- EP-A- 0 853 220
- WO-A-82/03266
- US-A- 3 695 053
- US-A- 4 394 959
- US-A- 4 448 596
- US-A- 4 464 907
- US-A- 4 593 531
- US-A- 5 289 868
- US-A- 6 141 987

## Beschreibung

Die Erfindung betrifft eine mehrstufige Sorptionskältemaschine/-wärmepumpe, insbesondere eine Absorptionskältemaschine (AKM) oder Absorptionswärmepume (AWP) nach Anspruch 1 sowie ein Verfahren zur Steuerung einer solchen Anlage nach Anspruch 7.

Die Wärmeverhältnisse einer Sorptionskältemaschine bzw. Sorptionswärmepumpe sind maßgeblich durch den realisierten thermodynamischen Arbeitskreislauf bestimmt und weniger durch die Lastanforderung - so z.B. auch die sogenannte Kältezahl, das Verhältnis zwischen Verdampferleistung und Antriebsleistung. Indem nicht das gesamte in der Maschine anfallende Kältemittelkondensat dem Verdampfer zugeführt wird, sondern ein variabler Anteil hiervon direkt und unverdampft in das Sorptionsmittel geleitet wird, kann z.B. die oben beschriebene Kältezahl reduziert werden, indem der Arbeitskreislauf gezielt verändert wird. Im Extremfall, d.h. dem völligen Abstellen des Verdampfers, indem aller ausgetriebener Kältemitteldampf auf einem Druckniveau kondensiert und flüssig dem Sorptionsmittel wieder zugeführt wird, entspricht dies dem sogenannten Heater-Betrieb einer Sorptionsanlage. Eine derartige Sorptionsanlage ist beispielsweise aus der US-A-4448596 bekannt.

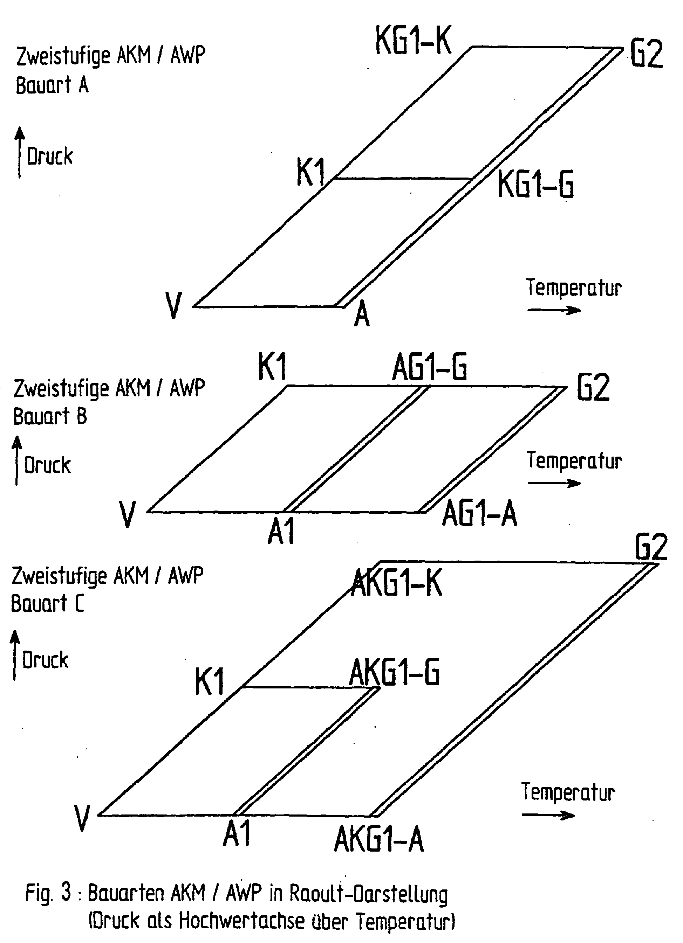

Mehrstufige Anlagen gibt es in drei grundsätzlichen Bauarten A, B, C, (siehe Fig. 3) sie bestehen aber immer aus mindestens zwei Generatoren, die bei unterschiedlichem Dampfdruck des Kältemittels und bzw. oder unterschiedlicher Temperatur des Sorptionsmittels arbeiten. In Bauart A werden nachgeordnete Generatoren bei niedrigerem Dampfdruck durch Kondensationswärme des zuvor auf höherem Dampfdruck ausgetriebenen Kältemittels angetrieben. In Bauart B erfolgt das Antreiben nachgeordneter Generatoren jeweils durch die Abwärme eines Absorbers. Hierzu muß das Sorptionsmittel des Absorbers unterschiedlich sein zum Sorptionsmittel des mit der Absorberabwärme angetriebenen Generators. In Bauart C liegt eine Überlagerung von Bauart A und B vor.

Zur Steigerung der Kältezahl können auch mehrstufige Anlagen eingesetzt werden. Bei mehrstufigen Anlagen nach Bauart A oder C können Wärmeverhältnisse darüberhinaus verändert werden, indem Nutzwärme in einem Nutzwärmekondensator entnommen wird in Konkurrenz zu einem maschineninternen Kondensator, dessen freiwerdende Wärme im Kälte- bzw. Wärmepumpenbetrieb kreislaufintern einen weiteren Austreiber beheizt. Auch hierdurch wird der Arbeitskreislauf gezielt verändert. Der Extremfall der vollständigen Kondensation im Nutzwärmekondensator entspricht dann dem sogenannten Heater-Betrieb, wenn das Kondensat flüssig und unverdampft ins Sorptionsmittel geleitet wird - der Verdampfer ist damit abgestellt und die Absorptionsmaschine wird zum Heizkesselersatz. Wird das Kondensat des Nutzwärmekondensators dagegen in den Verdampfer geleitet, so resultiert eine in ihrer Stufenzahl reduzierte, ggf. nur mehr einstufige Absorptionsanlage (da nachfolgende Austreiber nicht mehr beheizt werden).

Bei mehrstufigen Anlagen nach Bauart B, ebenso wie bei einstufigen Anlagen, beeinflusst die Nutzwärmekondensation nicht die erreichbare Kältezahl, solange die Kondensatströme aus dem ersten Kondensator und dem Nutzwärmekondensator vollständig dem Verdampfer zugeführt werden. Jedoch kann die Aufteilung des Kondensats zwischen Zuführung zum Verdampfer und flüssiger Zuführung in ein Sorptionsmittel zur Kältezahlregelung benutzt werden.

Der Einsatz von Sorptionsmaschinen als Wärmepumpen ist insbesondere bei Verwendung von Wasser als Kältemittel durch den hohen Gefrierpunkt nur bedingt für Erdsonden- bzw. Erdkollektorbetrieb geeignet, obwohl die Technik primärenergetisch, z.B. als zweistufige Absorptionswärmepumpe, attraktiv ist. Insbesondere ein monovalenter Betrieb ist in vielen Fällen mit Wasser als Kältemittel wegen der Gefahr des Einfrierens des Verdampfers nicht möglich. Das Einfrieren des Verdampfers kann durch eine gezielte Salzzugabe verhindert werden.

Aus der US-A-4593531 ist eine mehrstufige AKM/AWP bekannt, die sich ebenfalls zwischen einem Kühlbetrieb und einem so genannten Heater-Betrieb umschalten lässt. Im Kühlbetrieb wird am Verdampfer Nutzkälte bereitgestellt, während im Heater-Betrieb der Verdampfer "stillgelegt" wird. Das Stilllegen des Verdampfer erfolgt dadurch, dass die Kondensatzufuhr aus dem Kondensator in den Verdampfer durch ein Ventil gesperrt wird.

Es ist daher Aufgabe der vorliegenden Erfindung, eine mehrstufige Sorptionskältemaschine/-wärmepumpe anzugeben, bei der sich die Verdampferleistung leicht regeln und die Kältezahl vermindern lässt und gleichzeitig die geforderte Heizleistung stufenlos durch die unabhängig steigerbare Antriebsleistung gedeckt werden kann.

Die Lösung dieser Aufgabe erfolgt in vorrichtungstechnischer Hinsicht durch die Merkmale des Anspruch 1 und in verfahrensmäßiger Hinsicht durch die Merkmale des Anspruch 7.

In allen Fällen kann die Kältezahlreduktion stufenlos erfolgen, womit, z.B. bei gleicher Antriebsleistung, der Verdampfer geregelt, d.h. über die Kältezahl die Verdampferleistung gezielt verändert werden kann.

Während die Verdampferleistung und damit die Kältezahl vermindert werden, kann die geforderte Wärmenachfrage stufenlos durch die unabhängig steigerbare Antriebsleistung gedeckt werden.

Das Einfrieren des Verdampfers wird dadurch verhindert, daß die Leistung des Verdampfers gezielt so begrenzt wird, daß die interne Verdampfungstemperatur hinreichend hoch ist. Im Extremfall wird der Verdampfer ganz abgestellt - also z.B. wenn die Sole aus dem Erdkollektor bzw. der Erdsonde trotz reduzierter Verdampferleistung unter eine Mindesttemperatur sinkt. Dies erfolgt durch die Regelung des Dampfstromes aus dem zweiten Kondensator oder dem Generator in die dritte Dampfleitung.

Bei einer mehrstufigen Anlage kann diese Regelung zur gezielten Reduzierung der Kältezahl auch durch die Entnahme von Nutzwärme vermehrt auf höherem Temperaturniveau erfolgen. Sie steht damit nicht mehr als Antrieb für weitere nachgeordnete Stufen zur Verfügung und kann so die gesamte Kondensatbildung und damit Kältezahl mindern. Bei unveränderter Brennerleistung führt dies aber zu reduzierter Wärmeleistung der Absorptionswärmepumpe. Das Kondensat kann zunächst weiter dem Verdampfer zugeführt werden.

Wenn die Wärmeleistung weiter gesteigert werden muß, bei gleichbleibender oder sogar reduzierter Verdampferleistung, kann zudem Kondensat gezielt aus der Stufe, auf der die Wärme durch Kondensation entnommen wird, direkt und unverdampft anteilsmäßig in die Lösung zurückgeführt werden. Die Brennerleistung kann dann erhöht werden und dennoch kann die Verdampferleistung erniedrigt werden oder unverändert bleiben, indem die Kältezahl weiter abgesenkt wird.

Bei mehrstufigen Anlagen mit mehreren Nutzwärmeentnahmemöglichkeiten durch Kondensation des Kältemittels sind grundsätzlich für jedes derartige Nutzwärmeniveau eigene, geregelte Kondensatrückführungen in das Sorptionsmittel denkbar, wie auch eine gesammelte auf niedrigstem Nutzwärmekondensationsdruck oder darunter.

Durch Regelung kann jeweils die höchstmögliche Kältezahl, also die höchstmögliche Primärenergieeinsparung gewährleistet werden.

Die Unteransprüche beziehen sich auf vorteilhafte Ausgestaltungen der Erfindung.

Weitere Einzelheiten, Merkmale und Vorteile der Erfindung ergeben sich aus der nachfolgenden Beschreibung bevorzugter Ausführungsformen anhand der Zeichnung.

Es zeigt
Fig. 1 eine erste Ausführungsform der Erfindung in Form einer zweistufigen AKM/AWP (Bauart A) mit parallelen Hochtemperaturkondensatoren;
Fig. 2 eine zweite Ausführungsform der Erfindung in Form einer zweistufigen AKM/AWP (Bauart A) mit seriellen Hochtemperaturkondensatoren; und
Fig. 3 zeigt schematisch drei Bauarten von mehrstufigen AKM/AWP, die entsprechend der vorliegenden Erfindung modifiziert werden können.

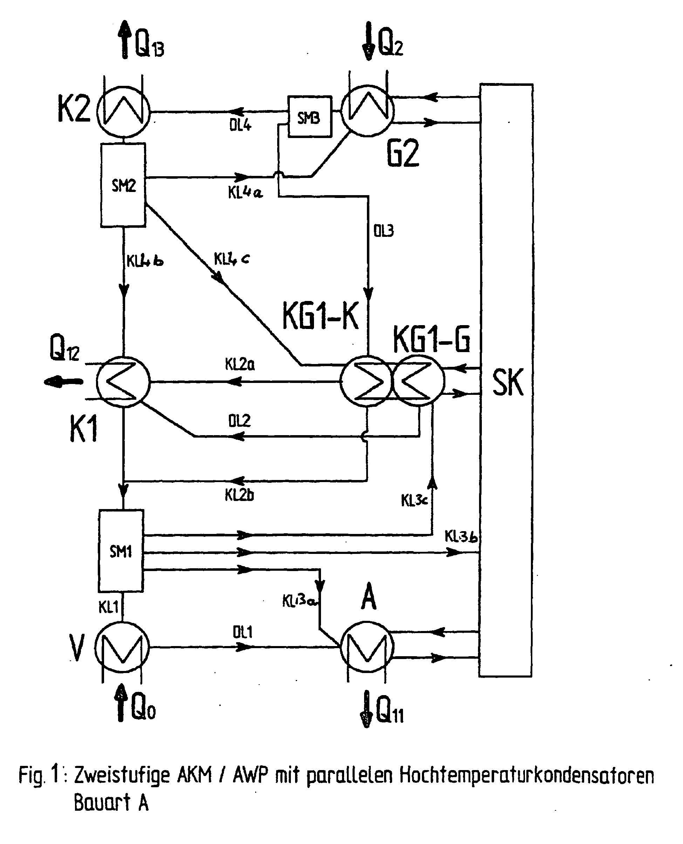

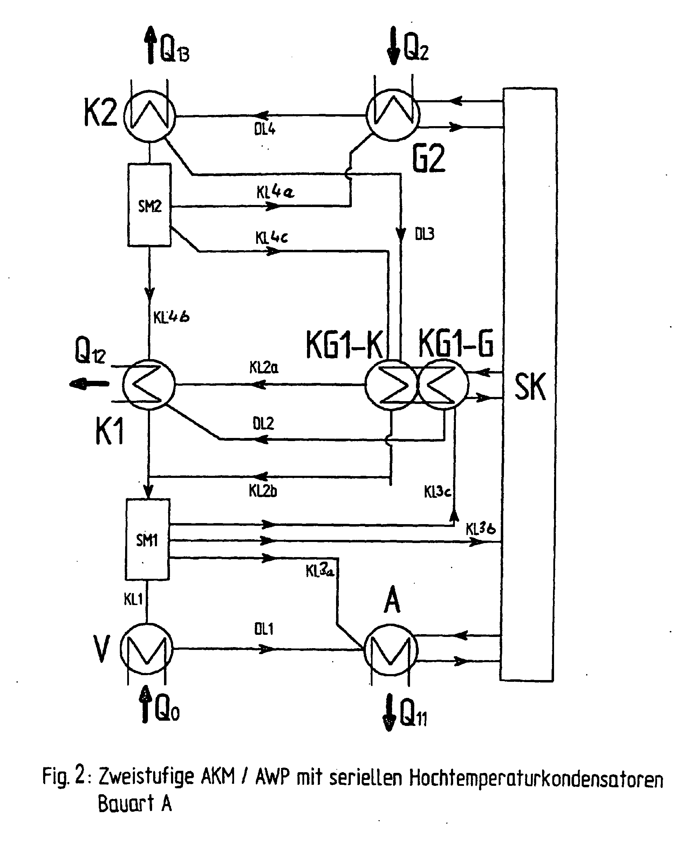

Die erste und zweite beispielhafte Ausführungsform der Erfindung nach den Figuren 1 und 2 zeigen zweistufige AKM/AWP des Typs bzw. der Bauart A nach Fig. 3.

Die erste Ausführungsform nach Fig. 1 ist eine zweistufige AKM/AWP mit einem Verdampfer V, einem Absorber A, einem Kondensator/Generator KG1, einem ersten Kondensator K1, einem zweiten Kondensator K2 und einem Hochdruckgenerator G2. Der Kondensator/Generator KG1 ist eine Kombination eines Kondensators und eines Generators in einem Bauteil (kann aber auch getrennt ausgeführt sein mittels Wärmeträgerkreislauf) und umfaßt eine Kondensatorseite KG1-K und eine Generatorseite KG1-G. Der Absorber A, der Kondensatorgenerator KG1, genauer gesagt die Generatorseite KG1-G, und der Hochdruckgenerator G2 sind über einen Sorptionsmittelkreislauf SK miteinander verbunden. Der Verdampfer V ist mit dem Absorber A über eine erste Dampfleitung DL1 verbunden. Der Kondensator/Generator KG1, genauer die Generatorseite KG1-G, ist über eine zweite Dampfleitung DL2 mit dem ersten Kondensator K1 verbunden. Der erste Kondensator K1 ist über eine erste Kondensatleitung KL1 mit dem Verdampfer V verbunden. Der Hochdruckgenerator G2 ist über eine dritte Dampfleitung DL3 mit der Kondensatorseite KG1-K des Kondensator/Generators KG1 und über eine vierte Dampfleitung DL4 mit dem zweiten Kondensator K2 verbunden. Über eine erste zweite Kondensatleitung KL2a ist die Kondensatorseite KG1-K mit dem ersten Kondensator K1 und über eine zweite zweite Kondensatleitung KL2b mit der ersten Kondensatleitung KL1 verbunden. Von der ersten Kondensatleitung KL1 zweigen nach der Einmündung der zweiten zweiten Kondensatleitung KL2b dritte Kondensatleitungen KL3a, KL3b und KL3c ab und verbinden die erste Kondensatleitung KL1 mit dem Absorber A - KL3a, dem Sorptionsmittelkreislauf SK - KL3b - und der Generatorseite KG1-G - KL3c. Der zweite Kondensator K2 ist über eine erste vierte Kondensatleitung KL4a mit dem Hochdruckgenerator G2, über eine zweite vierte Kondensatleitung KL4b mit dem ersten Kondensator K1 und über eine dritte vierte Kondensatleitung KL4c mit der Kondensatorseite KG1-K verbunden.

Die Regelung der Verdampferleistung im Verdampfer V erfolgt wahlweise bzw. kombiniert über das Steuermittel SM1 zur Aufteilung des Kondensatstromes zwischen der Kondensatleitung KL1 und einer oder mehreren Kondensatleitungen aus KL3a, KL3b, KL3c, über das Steuermittel SM2 zur Aufteilung des Kondensatstromes zwischen der Kondensatleitung KL4b oder KL4c und KL4a, oder über das Steuermittel SM3 zur Aufteilung des Dampfstromes zwischen den Dampfleitungen DL4 und DL3.

Die zweite Ausführungsform nach Fig. 2 unterscheidet sich von der ersten Ausführungsform nach Fig. 1 lediglich dadurch, dass die Dampfleitung DL3 nicht den Hochdruckgenerator G2 mit der Kondensatorseite KG1-K, sondern den zweiten Kondensator K2 mit der Kondensatorseite KG1-K verbindet. Anstelle mittels eines Steuermittels zum Aufteilen des Dampfstromes zwischen zwei Dampfleitungen kann hier der Dampfstrom in der Dampfleitung DL3 zum Kondensator KG1-K zur Verdampferleistungsregelung begrenzt werden.

## Patentansprüche

1. Mehrstufige Absorptions-Kältemaschine/-Wärmepumpe (AKM/AWP) mit
einem Generator (G2) zum Einkoppeln von Antriebswärme,
einem Absorber (A) zum Aufnehmen von Kältemittel in das Sorptionsmittel,
einem Verdampfer (V) zur Erzeugung von Nutzkälte bzw. Aufnahme von Umgebungswärme,
wenigstens einem ersten Kondensator (K1),
wenigstens einem Generator/Kondensator (KG1) mit einer Wärme abgebenden Kondensatorseite (KG1-K) und einer Wärme aufnehmenden Generatorseite (KG1-G), und
wenigstens einem zweiten Kondensator (K2),
wobei der Absorber (A) über eine erste Dampfleitung (DL1) mit dem Verdampfer (V) verbunden ist,
wobei die Generatorseite (KG1-G) des Kondensator/Generators (KG1) über eine zweite Dampfleitung (DL2) mit dem ersten Kondensator (K1) verbunden ist,
wobei die Kondensatorseite (KG1-K) des Kondensator/Generators (KG1) über eine dritte Dampfleitung (DL3) mit dem Generator (G2) oder mit dem zweiten Kondensator (K2) verbunden ist,
wobei Absorber (A), Generator (G2), der wenigstens eine Kondensator/Generator (KG1) über einen Sorptionsmittelkreislauf (SK) miteinander verbunden sind, und
wobei der zweite Kondensator (K2) über eine vierte Dampfleitung (DL4) mit dem Generator (G2) verbunden ist,
**gekennzeichnet durch**
ein Steuermittel zum Begrenzen des Dampfstromes aus dem zweiten Kondensator (K2) oder dem Generator (G2) in die dritte Dampfleitung (DL3).

2. Mehrstufige AKM / AWP nach Anspruch 1, **dadurch gekennzeichnet,**
**dass** der zweite Kondensator (K2) über eine erste vierte Kondensatleitung (KL4a) mit dem Generator (G2) und/oder über eine zweite vierte Kondensatleitung (KL4b) mit dem ersten Kondensator (K1) und/oder über eine dritte vierte Kondensatleitung (KL4c) mit dem Generator/Kondensator (KG1) verbunden ist, und
**dass** ein zweites Steuermittel (SM2) zum variablen Aufteilen des Kondensatstromes aus dem zweiten Kondensator (K2) zwischen der ersten vierten Kondensatleitung (KL4a), der zweiten vierten Kondensatleitung (KL4b) oder der dritten vierten Kondensatleitung (KL4c) vorgesehen ist.

3. Mehrstufige AKM / AWP nach Anspruch 2,
**gekennzeichnet durch** ein drittes Steuermittel (SM3) zum Aufteilen des Dampfstromes aus dem Generator (G2) in die vierte und dritte Dampfleitung (DL4 und DL3).

4. Mehrstufige AKM / AWP nach einem der vorhergehenden Ansprüche, **dadurch gekennzeichnet, dass** eine Mehrzahl von ersten Kondensatoren (K1) auf näherungsweise gleichem Druckniveau vorgesehen sind.

5. Mehrstufige AKM / AWP nach einem der vorhergehenden Ansprüche, **dadurch gekennzeichnet, dass** der Sorptionsmittelkreislauf (SK) durch einen Flüssigkeitskreislauf realisiert ist.

6. Mehrstufige AKM / AWP nach einem der vorhergehenden Ansprüche 1 bis 4, **dadurch gekennzeichnet, dass** der Sorptionsmittelkreislauf (SK) mittels einem Feststoff als Sorptionsmittel und durch zwischen Absorber- und Generatorfunktion umschaltbare Absorber/Generatoren realisiert ist.

7. Verfahren zur Steuerung der Verdampferleistung In einer AKM/AWP nach einem der vorgehenden Ansprüche, **dadurch gekennzeichnet, dass** die Verdampferleistung des Verdampfers (V) durch Regelung des Massenstromverhältnisses der Kondensatströme in wenigstens zwei der Kondensatleitungen aus der Gruppe der ersten (KL1), der wenigstens einen zweiten (KL2a, KL2b, KL2c, KL2d, KL2e), der wenigstens einen dritten (KL3a, KL3b, KL3c), und der wenigstens einen vierten (KL4a, KL4b, KL4c) geregelt wird.

8. Verfahren zur Steuerung der Verdampferleistung in einer AKM/AWP nach einem der vorgehenden Ansprüche 1 bis 6, **dadurch gekennzeichnet, dass** die Verdampferleistung des Verdampfers (V) durch Regelung des Massenstromverhältnisses der Dampfströme in wenigstens zwei der Dampfleitungen aus der Gruppe der zweiten, dritten und vierten Dampfleitung (DL2, DL3, DL4) geregelt wird.

9. Verfahren zur Steuerung der Verdampferleistung in einer AKM/AWP nach einem der vorgehenden Ansprüche 1 bis 6, **dadurch gekennzeichnet, dass** die Verdampferleistung des Verdampfers (V) durch Regelung der Kühlung des ersten und/oder zweiten Kondensators (K2, KG1-K) geregelt wird.

## Claims

1. Multi-stage absorption refrigerating machine/heat pump (AKM/AWP) with
a generator (G2) for the infeed of drive heat,
an absorber (A) for the uptake of refrigerant into the sorption medium,
an evaporator (V) for the generation of useful coal or the uptake of ambient heat,
at least one first condenser (K1),
at least one generator/condenser (KG1) with a heat-discharging condenser side (KG1-K) and with a heat-uptaking generator side (KG1-G), and
at least one second condenser (K2),
the absorber (A) being connected to the evaporator (V) via a first steam line (DL1),
the generator side (KG1-G) with the condenser/generator (KG1) being connected to the first condenser (K1) via a second steam line (DL2),
the condenser side (KG1-K) of the condenser/generator (KG1) being connected to the generator (G2) or to the second condenser (K2) via a third steam line (DL3),
the absorber (A), the generator (G2) and the at least one condenser/generator (KG1) being connected to one another via a sorption-medium circuit (SK), and
the second condenser (K2) being connected to the generator (G2) via a fourth steam line (DL4),
**characterized by**
a control means for limiting the steam stream out of the second condenser (K2) or the generator (G2) into the third steam line (DL3).

2. Multi-stage AKM/AWP according to Claim 1, **characterized in that** the second condenser (K2) is connected to the generator (G2) via a first fourth condensate line (KL4a) and/or to the first condenser (K1) via a second fourth condensate line (KL4b) and/or to the generator/condenser (KG1) via a third fourth condensate line (KL4c), and **in that** a second control means (SM2) is provided for the variable apportionment of the condensate stream from the second condenser (K2) between the first fourth condensate line (KL4a), the second fourth condensate line (KL4b) or the third fourth condensate line (KL4c).

3. Multi-stage AKM/AWP according to Claim 2, **characterized by** a third control means (SM3) for the apportionment of the steam stream from the generator (G2) into the fourth or the third steam line (DL4 and DL3).

4. Multi-stage AKM/AWP according to one of the preceding claims, **characterized in that** a plurality of first condensers (K1) at approximately the same pressure level are provided.

5. Multi-stage AKM/AWP according to one of the preceding claims, **characterized in that** the sorption-medium circuit (SK) is implemented by a liquid circuit.

6. Multi-stage AKM/AWP according to one of the preceding Claims 1 to 4, **characterized in that** the sorption-medium circuit (SK) is implemented by means of a solid as the sorption medium and by absorbers/generators capable of being changed over between an absorber and a generator function.

7. Method for controlling the evaporator power in an AKM/AWP according to one of the preceding claims, **characterized in that** the evaporator power of the evaporator (V) is regulated by the regulation of the mass flow conditions of the condensate streams in at least two of the condensate lines from the group of the first (KL1), of the at least one second (KL2a, KL2b, KL2c, KL2d, KL2e), of the at least one third (KL3a, KL3b, KL3c) and of the at least one fourth (KL4a, KL4b, KL4c) condensate lines.

8. Method for controlling the evaporator power in an AKM/AWP according to one of the preceding Claims 1 to 6, **characterized in that** the evaporator power of the evaporator (V) is regulated by the regulation of the mass flow conditions of the steam streams in at least two of the steam lines from the group of the second, third and fourth steam lines (DL2, DL3, DL4).

9. Method for controlling the evaporator power in an AKM/AWP according to one of the preceding Claims 1 to 6, **characterized in that** the evaporator power of the evaporator (V) is regulated by the regulation of the cooling of the first and/or the second condenser (K2, KG1-K).

## Revendications

1. Machine frigorifique/pompe à chaleur à absorption à plusieurs étages, comprenant
un générateur (G2) pour injecter la chaleur motrice,
un absorbeur (A) pour absorber l'agent réfrigérant dans l'agent de sorption,
un évaporateur (V) pour générer du froid utile respectivement pour recueillir la chaleur environnante,
au moins un premier condensateur (K1),
au moins un générateur/condensateur (KG1) avec un côté condensateur (KG1-K) délivrant la chaleur et un côté générateur (KG1-G) recueillant la chaleur, et
au moins un deuxième condensateur (K2),
l'absorbeur (A) étant raccordé à l'évaporateur (V) par l'intermédiaire d'une première conduite de vapeur (DL 1),
le côté générateur (KG1-G) du condensateur/générateur (KG1) étant raccordé au premier condensateur (K1) par l'intermédiaire d'une deuxième conduite de vapeur (DL2),
le côté condensateur (KG1-K) du condensateur/générateur (KG1) étant raccordé au générateur (G2) ou au deuxième condensateur (K2) par l'intermédiaire d'une troisième conduite de vapeur (DL3),
l'absorbeur (A), le générateur (G2), le au moins un condensateur/générateur (KG1) étant reliés l'un avec l'autre par l'intermédiaire d'un circuit d'agent de sorption (SK) et
le deuxième condensateur (K2) étant raccordé au générateur (G2) par l'intermédiaire d'une quatrième conduite de vapeur (DL4),
**caractérisée par** un moyen de commande destiné à limiter le courant de vapeur du deuxième condensateur (K2) ou du générateur (G2) dans la troisième conduite de vapeur (DL3).

2. Machine frigorifique/pompe à chaleur à absorption à plusieurs étages, selon la revendication 1, **caractérisée en ce que** le deuxième condensateur (K2) est raccordé au générateur (G2) par l'intermédiaire d'une première quatrième conduite de condensat (KL4a) et/ou au premier condensateur (K1) par l'intermédiaire d'une deuxième quatrième conduite de condensat (KL4b) et/ou au générateur/condensateur (KG1) par l'intermédiaire d'une troisième quatrième conduite de condensat (KL4c), et **en ce qu'**un deuxième moyen de commande (SM2) est prévu pour la répartition variable du courant de condensat du deuxième condensateur (K2) entre la première quatrième conduite de condensat (KL4a), la deuxième quatrième conduite de condensat (KL4b) ou la troisième quatrième conduite de condensat (KL4c).

3. Machine frigorifique/pompe à chaleur à absorption à plusieurs étages, selon la revendication 2, **caractérisée par** un troisième moyen de commande (SM3) prévu pour la répartition du courant de vapeur du générateur (G2) dans la quatrième et la troisième conduite de vapeur (DL4 et DL3).

4. Machine frigorifique/pompe à chaleur à absorption à plusieurs étages, selon l'une des revendications précédentes, **caractérisée en ce que** plusieurs premiers condensateurs (K1) sont prévus à un niveau de pression à peu près identique.

5. Machine frigorifique/pompe à chaleur à absorption à plusieurs étages, selon l'une des revendications 1 à 4, **caractérisée en ce que** le circuit d'agent de sorption (SK) est réalisé par un circuit de liquide.

6. Machine frigorifique/pompe à chaleur à absorption à plusieurs étages, selon l'une des revendications 1 à 4, **caractérisée en ce que** le circuit d'agent de sorption (SK) est réalisé à l'aide d'un solide en tant qu'agent de sorption et par des absorbeurs/générateurs commutables entre la fonction d'absorbeur et de générateur.

7. Procédé de contrôle de la puissance de l'évaporateur dans une machine frigorifique/pompe à chaleur à absorption, selon l'une des revendications précédentes, **caractérisé en ce que** la puissance de l'évaporateur (V) est réglée par le réglage du rapport du débit massique des courants de condensat dans au moins deux des conduites de condensat du groupe formé par la première (KL1), la au moins une deuxième ((KL2a, KL2b, KL2c, KL2d, KL2e), la au moins une troisième (KL3a, KL3b, KL3c) et la au moins une quatrième (KL4a, KL4b, KL4c).

8. Procédé de contrôle de la puissance de l'évaporateur dans une machine frigorifique/pompe à chaleur à absorption, selon l'une des revendications précédentes 1 à 6, **caractérisé en ce que** la puissance de l'évaporateur (V) est réglée par le réglage du rapport du débit massique des courants de condensat dans au moins deux des conduites de vapeur du groupe de la deuxième, troisième et quatrième conduite de vapeur (DL2, DL3, DL4).

9. Procédé de contrôle de la puissance de l'évaporateur dans une machine frigorifique/pompe à chaleur à absorption, selon l'une des revendications précédentes 1 à 6, **caractérisé en ce que** la puissance de l'évaporateur (V) est réglée par le réglage du refroidissement du premier et/ou deuxième condensateur (K2, KG1-K).
